# EUROPÄISCHE PATENTSCHRIFT

(11) **EP 3 959 069 B1**
(45) Veröffentlichungstag und Bekanntmachung des Hinweises auf die Patenterteilung: **06.05.2026**
(21) Anmeldenummer: 20714148.2
(22) Anmeldetag: 17.03.2020
(51) Int. Cl.: B29C 73/16, F04B 35/06, F04B 39/10

(54) **KOMPRESSOREINHEIT ZUR LUFTVERDICHTUNG INNERHALB TRAGBARER/TRANSPORTABLER SYSTEME, VERWENDUNG EINES FLATTERVENTILS IN EINER SOLCHEN KOMPRESSOREINHEIT UND TRAGBARES/TRANSPORTABLES SYSTEM ZUM ABDICHTEN UND AUFPUMPEN VON FAHRZEUGLUFTREIFEN**
COMPRESSOR UNIT FOR COMPRESSING AIR WITHIN PORTABLE/TRANSPORTABLE SYSTEMS, USE OF A FLUTTER VALVE IN A COMPRESSOR UNIT OF THIS KIND AND PORTABLE/TRANSPORTABLE SYSTEM FOR SEALING AND INFLATING VEHICLE PNEUMATIC TYRES
UNITÉ DE COMPRESSEUR SERVANT À COMPRIMER DE L'AIR À L'INTÉRIEUR DE SYSTÈMES PORTATIFS/TRANSPORTABLES, UTILISATION D'UNE SOUPAPE À LAMES DANS UNE TELLE UNITÉ DE COMPRESSEUR ET SYSTÈME PORTATIF/TRANSPORTABLE SERVANT À ÉTANCHÉIFIER ET GONFLER DES PNEUMATIQUES DE VÉHICULE

(30) Priorität: 26.04.2019 DE 102019205985
(43) Veröffentlichungstag der Anmeldung: 02.03.2022
(73) Patentinhaber: Continental Reifen Deutschland GmbH, 30175 Hannover (DE)
(72) Erfinder: SCHLOSSER, Florian - c/o Continental AG, 30419 Hannover (DE); ZAUM, Christopher - c/o Continental AG, 30419 Hannover (DE)
(74) Vertreter: Continental Corporation
(86) Internationale Anmeldenummer: PCT/EP2020/057169
(87) Internationale Veröffentlichungsnummer: WO 2020/216531

(56) Entgegenhaltungen:
- EP-A1- 0 100 301
- DE-A1- 102005 002 542
- DE-A1- 2 945 727
- DE-U1- 202016 101 104
- US-A- 1 661 148
- US-A- 4 915 594
- US-A- 5 173 040

## Beschreibung

Die Erfindung betrifft eine Kompressoreinheit zur Luftverdichtung innerhalb tragbarer/transportabler Systeme, wobei die Kompressoreinheit mindestens einen Motor und mindestens einen Hubkolbenverdichter mit einem Zylinder und mit einem Kolben aufweist. Die Erfindung betrifft auch eine Verwendung eines Flatterventils und ein tragbares/transportables System zum Abdichten und Aufpumpen von Fahrzeugluftreifen.

Kompressoreinheiten zur Luftverdichtung innerhalb tragbarer Systeme, wie beispielsweise in Pannen-Reparaturkits für Pkws, müssen insbesondere zwei Voraussetzungen erfüllen. Einerseits müssen sie sehr kompakt sein, damit sie einen möglichst geringen Platz und ein möglichst geringes Gewicht im Auto einnehmen, beispielsweise Kofferraum. Andererseits müssen sie eine möglichst lange Lebensdauer aufweisen, d.h. über einen langen Zeitraum einsetzbar sein. Diese beiden Voraussetzungen ergeben meistens einen Zielkonflikt, da sie nicht gleichzeitig und im gleichen Maße verbessert werden können.

Im Stand der Technik sind verschiedene Kompressoren bekannt:
DE 102013 107 850 A1 offenbart eine "Kompressoreinheit in einer tragbaren Druckluftquelle, welche einen über ein Schubkurbelgetriebe angetriebenen Hubkolbenverdichter mit einem in einem Zylinder oszillierend bewegten Kolben aufweist" (s. Anspruch 1).

Das Dokument mit der internationale Veröffentlichungsnummer WO 96/05430 offenbart "Kolbenverdichter für gasförmige Medien, vorzugsweise Luft, mit einer innerhalb eines Zylinders (60) hin- und herbewegbaren Kolbenstange mit starr verbundenem Kolben (58), der einen Durchlaß (80) für das von der Kolbenunterseite anzusaugende gasförmige Medium mit einem sich bei Abwärtsbewegung des Kolbens öffnenden und bei Aufwärtsbewegung des Kolbens schließenden Einlaßventil (80) aufweist" (s. Anspruch 1).

DE 20 2016 101104 U1 offenbart eine Kompressoreinheit gemäß dem Oberbegriff des Anspruchs 1.

Eine weitere Aufgabe, die der Erfindung zugrunde liegt, besteht darin, einen Kompressoreinheit zur Luftverdichtung innerhalb tragbarer/transportabler Systeme bereitzustellen, der eine verlängerte Lebensdauer und oder eine kompaktere Bauweise aufweist.

Gelöst wird diese Aufgabe erfindungsgemäß durch eine Kompressoreinheit zur Luftverdichtung innerhalb tragbarer/transportabler gemäß dem Anspruch 1.

Im Rahmen der vorliegenden Erfindung umfasst ein Flatterventil mindestens ein Flatterelement, bevorzugt besteht das Flatterventil aus einem Flatterelement. Aufgrund ihrer kompakten Bauweise werden Kompressoreinheiten zur Luftverdichtung innerhalb tragbarer/transportabler Systeme häufig mit Opferdichtern mit geringem Volumen und Hochfrequenz gebaut, um das nötige Strömungsvolumen pro Zeiteinheit befördern zu können. Üblicherweise werden als Ein -und Auslassventile im Zylinder einer besagten Kompressoreinheit Federventile eingesetzt. Diese haben einerseits den Nachteil, dass sie aufgrund ihrer Bauweise eine schlechtere Strömungsdynamik aufgrund einer nicht geradlinigen Strömung bewirken. Andererseits haben diese Federventile eine von der Stärke ihrer Feder abhängige Eigenfrequenzen im Bereich von 100 bis 500 s⁻¹, welche sehr nahe der Hubfrequenz einer Kompressoreinheit zur Luftverdichtung innerhalb tragbarer/transportabler Systeme liegt. Erreicht ein Federventil aufgrund der Bewegung des Kupferdichters seiner Eigenfrequenzen, so kann und im häufigsten Falle wird das System irreparablen Schaden nehmen und ist somit nicht mehr einsetzbar.

Die Eigenfrequenzen von Flatterventilen liegen dagegen weit über den Hubfrequenzen von Kompressoreinheiten zur Luftverdichtung innerhalb tragbarer/transportabler Systeme und sind somit trotz ihrer kompakten Bauweise zudem länger haltbar. Besonders bevorzugt ist daher eine erfindungsgemäße Kompressoreinheit mit einem oder mehreren Flatterventilen als Ein- und/oder Auslassventil des Zylinders, wobei das oder die Flatterventile
- eine Eigenfrequenz von größer als 250 s⁻¹ aufweisen, bevorzugt von größer als 500 s⁻¹, und/oder
- mindestens eine zweimal oder dreimal so große Eigenfrequenzen wie die Hubfrequenz der Kompressoreinheit aufweisen.

Im Rahmen der vorliegenden Erfindung umfasst die Flatterventilkomponente zumindest das Flatterventil. Optional kann die Flatterventilkomponente noch weiter Subkomponenten aufweisen, wie beispielsweise eine selbst schneidende Schraube wie nachstehend beschrieben. Bevorzugt besteht die Flatterventilkomponente ausschließlich aus dem Flatterventil.

Im Rahmen der vorliegenden Erfindung umfasst eine erfindungsgemäße Kompressoreinheit im folgenden auch erfindungsgemäße Vorrichtung bezeichnet. Bevorzugt ist eine erfindungsgemäße Vorrichtung wie vorstehend beschrieben oder wie vorstehend als bevorzugt beschrieben, wobei der Zylinder zusätzlich ein Flatterventil als Einlassventil des Zylinders aufweist.

Gemäß der Erfindung weist die Flatterventilkomponente ein Befestigungselement und ein oder mehrere Flatterelemente bestehend aus elastischem Material zur Abdichtung eines Luftkanals und zur Rückstellung von Luftströmen auf.

Ein Vorteil des vorstehend beschriebenen Aspekts der vorliegenden Erfindung ist, dass insbesondere ein elastisches Material die Funktion des Flatterventils vorteilhaft ausführt und die vorstehend beschriebenen vorteilhaften Eigenfrequenzen aufweist.

Besonders vorteilhaft als elastisches Material wie vorstehend beschrieben sind Federstahle mit einem Elastizitätsmodul im Bereich von 0,05 Pa bis 250 GPa und Kautschuke mit einem Elastizitätsmodul im Bereich von 0,05 Pa bis 250 GPa, ganz besonders bevorzugt ausschließlich Kautschuke mit einem Elastizitätsmodul im Bereich von 0,1 GPa bis 10 GPa, insbesondere ganz besonders bevorzugt ausschließlich Kautschuke mit einem Elastizitätsmodul im Bereich von 0,15 bis 4 GPa. Im Rahmen der vorliegenden Erfindung wird die Elastizität bevorzugt mittels des Elastizitätsmoduls E gemäß DIN EN ISO 527-2 bei Raumtemperatur.

Bevorzugt ist eine erfindungsgemäße Vorrichtung wie vor- oder nachstehend beschrieben oder wie vor- oder nachstehend als bevorzugt beschrieben, wobei das Abdichtungssegmente aus einem vom Anbringungssegment verschiedenen Material besteht, wobei das Anbringungssegment bevorzugt aus einem Kautschuk mit einem Elastizitätsmodul im Bereich von 5 GPa bis 10 GPa und das Abdichtungssegment bevorzugt aus einem Kautschuk mit einem Elastizitätsmodul im Bereich von 0,1 GPa bis 5 GPa besteht, wobei der Übergang von dem elastischen Material des Anbringungssegments zum elastische Material des Abdichtungssegments ganz besonders bevorzugt graduelle ist. Der Vorteil eines solchen Flatterelements ist, dass das Flatterelement im Gegensatz zu Flatterelementen welche nur einem Material bestehen, besonders gut an der Befestigungskomponente der Flatterventilkomponente haftet, besonders vorteilhafte Eigenfrequenzen aufweist und gleichzeitig besonders gut den Zylinderauslasskanal einer erfindungsgemäßen Kompressoreinheit abgedichtet. Die besonders vorteilhaften Eigenfrequenzen wie vorstehend beschrieben werden hierbei durch den graduellen Übergang von dem einen Kautschuk zu dem elastischen Kautschuk des Abdichtungssegments eingestellt.

Erfindungsgemäß umfasst das eine oder mindestens eins der mehreren Flatterelemente
- ein Abdichtsegment zur Abdichtung des Auslasskanals des Zylinders umfasst und ein Anbringungssegment zum Anbringen an das Befestigungselement der Flatterventilkomponente. Bevorzugt ist das eine oder mindestens eins der mehreren Flatterelemente eine Scheibe mit der gleichen Form wie der Querschnitt des Auslasskanals des Zylinders.

Ein Vorteil des vorstehend beschriebenen Aspekts der vorliegenden Erfindung ist, dass die Eigenfrequenzen des Flatterventils einer erfindungsmäßen Kompressoreinheit einfacher bestimmt werden können, wenn das Flatterelement in ein Abdichtsegment und ein Anbringungssegment unterteilt wird, und somit geeignete Hubfrequenzen für die Kompressoreinheit bestimmt werden können.

Bevorzugt ist eine erfindungsgemäße Vorrichtung wie vorstehend beschrieben oder wie vorstehend als bevorzugt beschrieben, wobei das eine oder mindestens eins der mehreren Flatterelemente
- die Form einer Lochscheibe mit einem mittigen Loch aufweist. Erfindungsgemäß ist
- das Abdichtsegment in Strömungsrichtung nach dem Anbringungssegment angeordnet,
wobei bevorzugt der radial äußere Abschnitt des einen oder des mindestens einen Flatterelements das Abdichtsegment ist und der radial innere Abschnitt des einen oder des mindestens einen Flatterelements das Anbringungssegment ist.

Ein Vorteil des vorstehend beschriebenen Aspekts der vorliegenden Erfindung ist, dass solche Flatterelemente besonders gut zum Abdichten von radialsymmetrische Auslass- oder Einlasskanälen des Zylinders geeignet sind.

Bevorzugt ist eine erfindungsgemäße Vorrichtung wie vorstehend beschrieben oder wie vorstehend als bevorzugt beschrieben, wobei das eine oder mindestens eins der mehreren Flatterelemente in einem Zylinderauslasskanal der Kompressoreinheit angebracht ist, wobei das elastische Material bevorzugt ausgesucht ist aus der Gruppe bestehend aus Polyethylen, Polypropylen, Fluorkautschuke, Chlorkautschuke, Silikonkautschuke, Polyurethankautschuke, Federstahl. Besonders bevorzugt sind dabei Fluorkautschuke wie FKM, FVMQ, FFPM (abgekürzt nach DIN ISO 1629), Chlorkautschuke wie CM, CIIR, CR, CSM (allesamt abgekürzt nach DIN ISO 1629), Silikonkautschuke wie VMQ (allesamt abgekürzt nach DIN ISO 1629), Polyurethan-Kautschuk (AU) (abgekürzt nach DIN ISO 1629), und/oder Federstahl gemäß DIN EN 10089:2003-04.

Ein Vorteil des vorstehend beschriebenen Aspekts der vorliegenden Erfindung ist, dass insbesondere die vorstehend beschriebenen Materialien geeignete Eigenfrequenzen als Flatterelement aufweisen.

Bevorzugt ist eine erfindungsgemäße Vorrichtung wie vorstehend beschrieben oder wie vorstehend als bevorzugt beschrieben, wobei das Anbringungssegment des Flatterelements formschlüssig oder stoffschlüssig, bevorzugt stoffschlüssig, mit dem Befestigungselement der Flatterventilkomponente verbunden ist.

Ein Vorteil des vorstehend beschriebenen Aspekts der vorliegenden Erfindung ist, dass diese bevorzugte Ausführungsform der vorliegenden Erfindung eine besonders einfache und somit auch stabile Bauweise aufweist, was die Lebensdauer einer erfindungsgemäßen Kompressoreinheit weiter erhöht. Durch eine stoffschlüssige Verbindung kann eine noch stabilere Bauweise im Vergleich zu einer formschlüssigen Verbindung erreicht werden, wodurch besonders starke Rückpralldrücke abgefangen werden können und das Eigenfrequenzband des Flatterventils verengert werden kann.

Im Rahmen der vorliegenden Erfindung ist das Eigenfrequenzband eines Ventils bevorzugt der Schwingungsbereich während des Einsatzes des Ventils, in dem sich das Ventil selbst auspendelt und somit ausbricht.

Bevorzugt ist eine erfindungsgemäße Vorrichtung wie vorstehend beschrieben oder wie vorstehend als bevorzugt beschrieben, wobei mindestens eins der Abdichtsegmente des einen oder der mehreren Flatterelemente eine Quer- sowie eine Längserstreckung aufweist, wobei das Verhältnis von Längs- zu Quererstreckung im Bereich von 500:1 bis 1:1 liegt, wobei die Längserstreckung des mindestens einen Abdichtsegments bevorzugt einen Abdichtwinkel β zur Strömungsrichtung im Bereich von 10 bis 80° aufweist, ganz besonders bevorzugt im Bereich von 30° bis 60°. Dies gilt bevorzugt in Kombination mit den verschiedenen vorstehend beschriebenen Flatterelementen einer vorstehend als bevorzugt beschriebenen Kompressoreinheit, besonders bevorzugt wenn wie vorstehend beschrieben das eine oder eines der mehreren Flatterelementen die Form einer Scheibe oder Lochscheibe aufweist.

Ein Vorteil des vorstehend beschriebenen Aspekts der vorliegenden Erfindung ist, dass die Bauweise eine erfindungsgemäße Kompressoreinheit noch kompakter ausgestaltet werden kann im Vergleich mit anderen erfindungsgemäßen Kompressoreinheiten.

Bevorzugt ist eine erfindungsgemäße Vorrichtung wie vorstehend beschrieben oder wie vorstehend als bevorzugt beschrieben, wobei
- der Hubraum des Zylinders im Bereich von 1 bis 1000 cm³ liegt, bevorzugt im Bereich von 2 bis 200 cm³, besonders bevorzugt im Bereich von 3 bis 50 cm³,
   und/oder
- der Hubkolbenverdichter dazu eingerichtet ist, eine Hubfrequenz im Bereich von 1 bis 1000 s⁻¹ zu erreichen, bevorzugt im Bereich von 10 bis 500 s⁻¹, besonders bevorzugt im Bereich von 140 bis 450 s⁻¹.

Ein Vorteil des vorstehend beschriebenen Aspekts der vorliegenden Erfindung ist, dass aufgrund des Einsatzes des Vaters Ventil insbesondere Kompressoreinheit mit den vorstehend beschriebenen Eigenschaften gebaut werden können, welche eine längere Lebensdauer und eine kompaktere Bauweise als solche aus dem Stand der Technik aufweisen.

Bevorzugt ist eine erfindungsgemäße Vorrichtung wie vorstehend beschrieben oder wie vorstehend als bevorzugt beschrieben, wobei die Kompressoreinheit keine Federelemente, insbesondere keine metallhaltige Feder zur Verwendung in einem Ventil, aufweist.

Ein Vorteil des vorstehend beschriebenen Aspekts der vorliegenden Erfindung ist, dass aufgrund der Vermeidung sämtlicher Federventile, d.h. Federn zur Verwendung in einem Ventil, die Führung in der Luftströmung innerhalb der Kompressoreinheit gemäß der vorliegenden Erfindung noch variabler ausgestaltet werden kann.

Bevorzugt ist eine erfindungsgemäße Vorrichtung wie vorstehend beschrieben oder wie vorstehend als bevorzugt beschrieben, wobei die Kompressoreinheit Mittel zur Luftdruckmessung umfasst, wobei die Mittel zur Luftdruckmessung so ausgelegt sind, dass sie den Luftdruck in Strömungsrichtung hinter der Flatterventilkomponente des Zylinders messen können. Die besagten Mittel zur Luftdruckmessung sind dabei insbesondere eingerichtet um den Luftdruck im abzudichtenden Fahrzeugluftreifen während des Einsatzes des Kompressors zu messen. Daher erfolgt die Luftdruckmessung auch stets in Strömungsrichtung hinter dem Auslassventil des Zylinders.

Ein Vorteil des vorstehend beschriebenen Aspekts der vorliegenden Erfindung ist, dass aufgrund der reduzierten schwingenden Masse, insbesondere des vorstehend beschriebenen Flatterelements, der Luftdruck nach dem Auslassventil konstanter gehalten werden kann und somit der zu erreichende Luftdruck besser bestimmt werden kann. Der zu erreichende Luftdruck kann beispielsweise 2 bar oder mehr sein, um anschließend von einem Aufpumpmodus in einen Abdichtmodus des tragbaren/transportables Systems zum Abdichten und Aufpumpen von Fahrzeugluftreifen überzugehen. Alternativ kann auf diese Weise auch genauer ermittelt werden, ob der abzudichtende Fahrzeugluftreifen während des besagten Abdichtmodus ausreichend abgedichtet wurde.

Bisher überlagerten sich im Auslasskanal hinter dem Auslassventil immer die Schwingungen des Hubkolbens und der herkömmlichen Auslassventile, sodass es zu besonders hohen Druckschwankungen kam. Die Schwingungen eines Flatterventils sind im Vergleich zu den herkömmlichen Auslassventilen geringer Schwingungen im Betrieb.

Hierdurch lässt sich die Einstellung des Druckes im abzudichtenden Reifen besser kontrollieren.

Bevorzugt ist eine erfindungsgemäße Vorrichtung wie vorstehend beschrieben oder wie vorstehend als bevorzugt beschrieben, wobei die Flatterventilkomponente eine selbstschneidende Schraube zur Anbringung des einen oder des mindestens einen Flatterelements aufweist, wobei die selbstschneidende Schraube bevorzugt das Befestigungselement der Flatterventilkomponente darstellt.

Ein Vorteil des vorstehend beschriebenen Aspekts der vorliegenden Erfindung ist, dass eine noch kompaktere und ökonomischere Bauweise der Flatterventilkomponente im Vergleich mit anderen erfindungsgemäßen Kompressoreinheiten erreicht werden kann.

Bevorzugt ist eine erfindungsgemäße Vorrichtung wie vorstehend beschrieben oder wie vorstehend als bevorzugt beschrieben, wobei das Befestigungselement der Flatterventilkomponente an eine Innenwand des Zylinders angeschweißt ist.

Ein Vorteil des vorstehend beschriebenen Aspekts der vorliegenden Erfindung ist, dass diese bevorzugte Ausführungsform der vorliegenden Erfindung eine besonders einfache und somit auch stabile Bauweise aufweist, was die Lebensdauer einer erfindungsgemäßen Kompressoreinheit weiter erhöht. Durch eine geschweißte Verbindung kann eine noch stabilere Bauweise im Vergleich zu einer formschlüssigen Verbindung erreicht werden, wodurch besonders starke Rückpralldrücke abgefangen werden können und das Eigenfrequenzband des Flatterventils verengert werden kann.

In besonders hohem Maße bevorzugt ist eine erfindungsgemäße Vorrichtung wie vorstehend beschrieben, wobei die Kompressoreinheit mindestens einen Motor und mindestens einen Hubkolbenverdichter mit einem Zylinder und mit einem Kolben aufweist,
dadurch gekennzeichnet, dass
der Zylinder eine Flatterventilkomponente aufweist, wobei die Flatterventilkomponente mindestens ein Flatterventil als Auslassventil des Zylinders aufweist,
wobei
- die Flatterventilkomponente ein Befestigungselement und ein oder mehrere Flatterelemente bestehend aus elastischem Material zur Abdichtung eines Luftkanals und zur Rückstellung von Luftströmen aufweist,
- das eine oder mindestens eins der mehreren Flatterelemente
   - ein Abdichtsegment zur Abdichtung des Auslasskanals des Zylinders umfasst und ein Anbringungssegment zum Anbringen an das Befestigungselement der Flatterventilkomponente umfasst,
- das eine oder mindestens eins der mehreren Flatterelemente
   - die Form einer Lochscheibe mit einem mittigen Loch aufweist
      und
   - das Abdichtsegment in Strömungsrichtung nach dem Anbringungssegment angeordnet ist,
   wobei der radial äußere Abschnitt des einen oder des mindestens einen Flatterelements das Abdichtsegment ist und der radial innere Abschnitt des einen oder des mindestens einen Flatterelements das Anbringungssegment ist,
- das eine oder mindestens eins der mehreren Flatterelemente in einem Zylinderauslasskanal der Kompressoreinheit angebracht ist, wobei das elastische Material aus Federstahl mit einem Elastizitätsmodul im Bereich von 0,05 Pa bis 250 GPa oder Kautschuk mit einem Elastizitätsmodul im Bereich von 0,05 Pa bis 250 GPa, wobei das elastische Material bevorzugt ein Kautschuk ausgesucht aus der Gruppe bestehend aus Polyethylen, Polypropylen und Polyurethan, Fluorkautschuke, Chlorkautschuke ist,
- das Anbringungssegment des Flatterelements stoffschlüssig mit dem Befestigungselement der Flatterventilkomponente verbunden ist,
- das eine oder mindestens eins der mehreren Flatterelemente eine Quer- sowie eine Längserstreckung aufweist, wobei das Verhältnis von Längs- zu Quererstreckung im Bereich von 50:1 bis 10:1 liegt, wobei die Längserstreckung des sich Flatterventils einen Abdichtwinkel β zur Strömungsrichtung im Bereich von 30 bis 60° aufweist,
- der Hubraum des Zylinders im Bereich von 3 bis 50 cm³ liegt und
- die Hubfrequenz des Hubkolbenverdichters im Bereich von 140 bis 450 s⁻¹ liegt.

Die vorstehend beschriebenen vorteilhaften Aspekte einer erfindungsgemäßen Kompressoreinheit zur Luftverdichtung innerhalb tragbarer/transportabler Systeme gelten auch für sämtliche Aspekte einer nachstehend beschriebenen Verwendung eines Flatterventils und die nachstehend diskutierten vorteilhaften Aspekte erfindungsgemäßer Verwendungen von Flatterventilen gelten entsprechend für sämtliche Aspekte einer erfindungsgemäßen Kompressoreinheit zur Luftverdichtung innerhalb tragbarer/transportabler Systeme.

Die Offenbarung betrifft auch eine Verwendung eines Flatterventils, bevorzugt eines Flatterventils wie vorstehend beschrieben oder wie vorstehend als bevorzugt beschrieben, als Auslassventil in einer Kompressoreinheit, bevorzugt in einer Kompressoreinheit wie vorstehend beschrieben oder wie vorstehend als bevorzugt beschrieben, wobei das Flatterventil besonders bevorzugt zur Verbesserung der Messgenauigkeit der Druckmessung im Auslasskanal und/oder zur Erhöhung des erzeugten Volumenstroms und/oder zur Vermeidung der Anregung von Eigenfrequenzen des Auslassventils verwendet wird.

Bevorzugt ist eine Verwendung wie vorstehend beschrieben oder wie vorstehend als bevorzugt beschrieben oder wie vorstehend als besonders bevorzugt beschrieben, wobei
- der Hubraum des Zylinders im Bereich von 1 bis 1000 cm³ liegt, bevorzugt im Bereich von 2 bis 200 cm³, besonders bevorzugt im Bereich von 3 bis 50 cm³, und/oder
- die Hubfrequenz des Hubkolbenverdichters bevorzugt im Bereich von 1 bis 1000 s⁻¹ liegt, bevorzugt im Bereich von 10 bis 500 s⁻¹, besonders bevorzugt im Bereich von 140 bis 450 s⁻¹.

Die vorstehend beschriebenen vorteilhaften Aspekte einer erfindungsgemäßen Kompressoreinheit zur Luftverdichtung innerhalb tragbarer/transportabler Systeme und einer erfindungsgemäßen Verwendung eines Flatterventils gelten auch für sämtliche Aspekte eines nachstehend beschriebenen tragbaren/transportablen Systems und die nachstehend diskutierten vorteilhaften Aspekte erfindungsgemäßer tragbarer/transportabler Systeme gelten entsprechend für sämtliche Aspekte einer erfindungsgemäßen Kompressoreinheit zur Luftverdichtung innerhalb tragbarer/transportabler Systeme und erfindungsgemäße Verwendungen eines Flatterventils.

Die Erfindung betrifft auch ein tragbares/transportables System zum Abdichten und Aufpumpen von Fahrzeugluftreifen, umfassend
- mindestens eine Kompressoreinheit wie vorstehend beschrieben oder wie vorstehend als bevorzugt beschrieben
   und
- mindestens einen Dichtmittelbehälter zur Aufnahme eines Dichtmittels und/oder eines Gases
   und optional
- mindestens eine Verteilereinheit zum Erzeugen und Verteilen einer Dispersion bestehend aus Dichtmittel und Gas in einen Fahrzeugluftreifen

### Figurenbeschreibung:

Es zeigt:
- Figur 1:: Querschnittsansicht einer Flatterventilkomponente in einer erfindungsgemäßen Kompressoreinheit im geschlossenen Modus;
- Figur 2:: Querschnittsansicht einer Flatterventilkomponente in einer erfindungsgemäßen Kompressoreinheit im offenen Modus;
- Figur 3:: Querschnittsansicht auf eine schematisch dargestellte erfindungsgemäße Kompressoreinheit;
- Figur 4:: Querschnittsansicht einer Flatterventilkomponente mit verschweißtem Flatterelement in einer erfindungsgemäßen Kompressoreinheit.
- Figur 5:: Schematische Darstellung einer Flatterventilkomponente einer erfindungsgemäßen Kompressoreinheit.

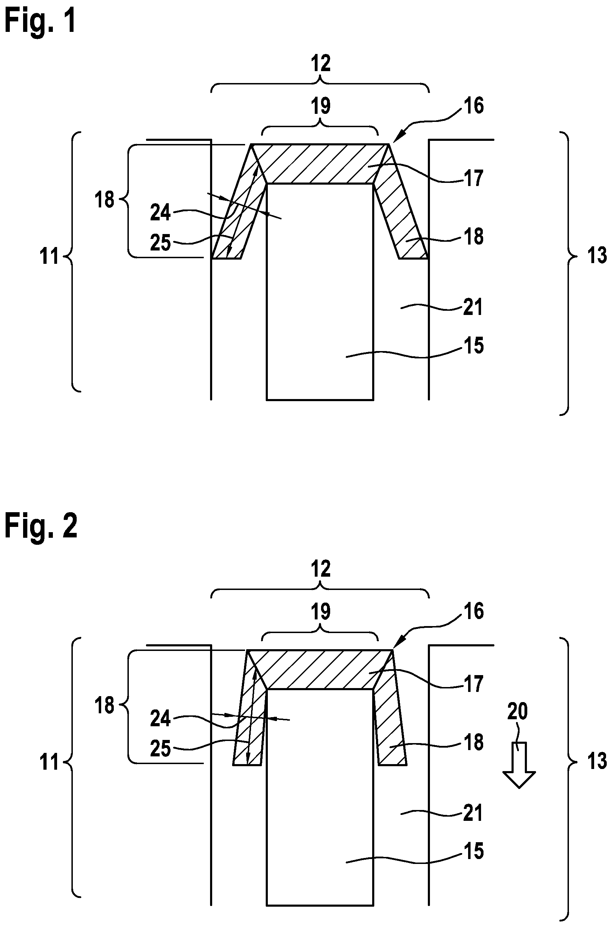

Figur 1 zeigt eine schematische Darstellung eines Auslassventils 13 am Auslasskanal 21 eines Zylinders einer erfindungsgemäßen Kompressoreinheit 1 umfassend eine Flatterventilkomponente 11 mit einem Befestigungselement 15 und einem Flatterelement 16, wobei das Flatterelement 16 ein Anbringungssegment 18 und ein Abdichtsegment 19 aus einem elastischem Material 17 aufweist. Die in Figur 1 schematisch dargestellte Flatterventilkomponente 11 befindet sich im geschlossenen Zustand, d.h. dass Luft gerade in den Zylinder 9 hineingezogen wird und das Flatterelement 16 somit durch Rückstellung verhindert, das über dem Auslasskanal 21 Luft in den Zylinder 9 gelangt.

Figur 2 zeigt eine schematische Darstellung eines Auslassventils 13 am Auslasskanal 21 eines Zylinders einer erfindungsgemäßen Kompressoreinheit 1 umfassend eine Flatterventilkomponente 11 mit einem Befestigungselement 15 und einem Flatterelement 16, wobei das Flatterelement 16 ein Anbringungssegment 18 und ein Abdichtsegment 19 aus einem elastischem Material 17 aufweist. Die in Figur 1 schematisch dargestellte Flatterventilkomponente 11 befindet sich im geöffneten Zustand, d.h. dass Luft gerade in Strömungsrichtung 20 aus dem Zylinder 9 hinausgepumpt und das Flatterelement 16 somit über den Auslasskanal 21 Luft über eine Verteilereinheit zum Erzeugen und Verteilen einer Dispersion bestehend aus Dichtmittel und Gas in einen Fahrzeugluftreifen (nicht gezeigt) gedrückt wird.

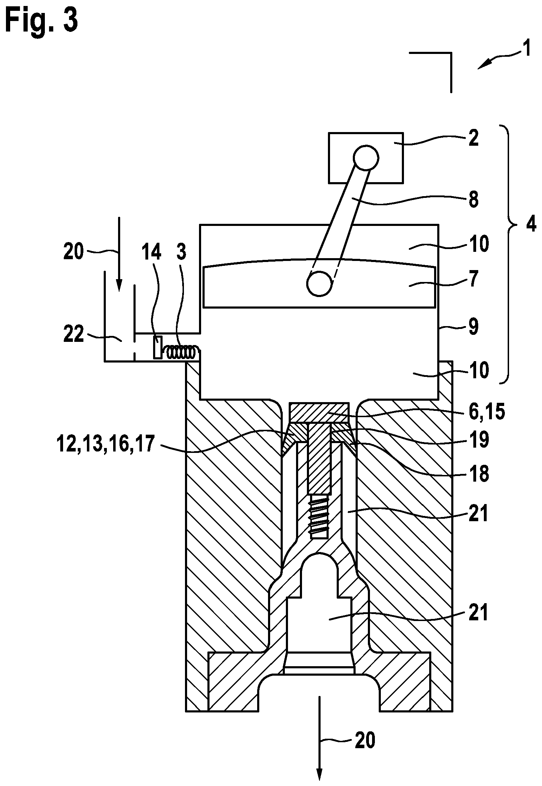

Figur 3 zeigt eine schematische Darstellung einer Kompressoreinheit 1 mit Hubkolbenverdichter 4 umfassend einen einem schematisch dargestellten Motor 2, welcher über eine sehr schematisch dargestellte Pleuelstange 8 einen Kolben 7 in einem Hubraum 10 eines Zylinders 9 auf und ab bewegen kann. Gezeigt ist zudem der Zylindereinlasskanal 22 mit einem Einlassventil 14, über welches Luft in Strömungsrichtung 20 zuerst in den Hubraum 10 und beim anschließenden Herunterfahren des Kolbens 7 zum Auslassventil 13 in den Zylinder Auslasskanal 21 strömt. In Figur 3 weist der Zylinderauslasskanal 21 mittig einer Halterung auf, in der das Flatterventil 12 mittels des Befestigungselements 15 der Flatterventilkomponente 11, hier als Beispiel eine selbstschneidende Schraube 6, angebracht ist. Das Flatterventil liegt in Figur 3 in Form einer Lochscheibe vor, die zwischen der selbst eine Schraube 6 und der besagten Halterung zusammengequetscht wird, wodurch das Abdichtungssegment 18 des Flatterelements 16 aus dem elastischem Material 17 an die Wände des Zylinderauslasskanal 21 gedrückt wird und somit ihre Rückstellfunktion und Abdichtfunktion ausführt. Das Abdichtungssegment 18 und das Anbringungssegment 19 sind in Figur 3 aus dem gleichen elastischem Material 17 hergestellt.

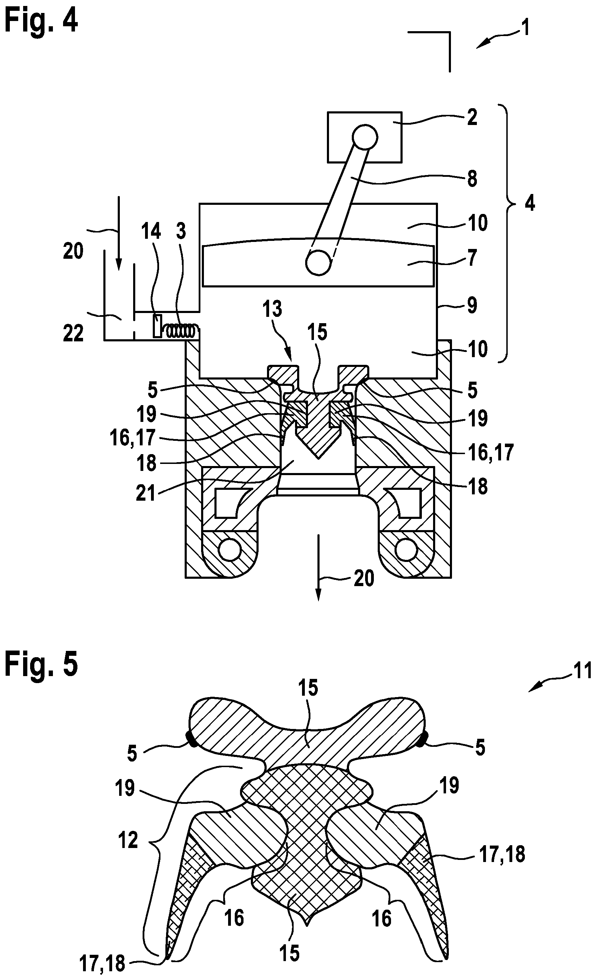

Figur 4 zeigt eine schematische Darstellung einer Kompressoreinheit 1 mit Hubkolbenverdichter 4 umfassend einen einem schematisch dargestellten Motor 2, welcher über eine sehr schematisch dargestellte Pleuelstange 8 einen Kolben 7 in einem Hubraum 10 eines Zylinders 9 auf und ab bewegen kann. Gezeigt ist zudem der Zylindereinlasskanal 22 mit einem Einlassventil 14, über welches Luft in Strömungsrichtung 20 zuerst in den Hubraum 10 und beim anschließenden Herunterfahren des Kolbens 7 zum Auslassventil 13 in den Zylinder Auslasskanal 21 strömt. In Figur 4 weist der Zylinderauslasskanal 21 2 Verschweißungsstelle 5 auf, über welche das Befestigungselement 15 der Flatterventilkomponente 11 mit den Wänden des Zylinderauslasskanal 21 stofflich verbunden und somit fest angebracht wird. Das Flatterventil liegt in Figur 4 in Form einer Lochscheibe vor, die um die dünnste Stelle des Befestigungssegments Segments Befestigungselements 15 gestülpt an den Wänden des Zylinderauslasskanal 21 anliegt und somit ihre Rückstellfunktion und Abdichtfunktion ausführt. Das Abdichtungssegment 18 und das Anbringungssegment 19 sind in Figur 3 aus dem gleichen elastischem Material 17 hergestellt.

Figur 5 zeigt eine schematische Darstellung einer Flatterventilkomponente 11 einer erfindungsgemäßen Kompressoreinheit beispielsweise in Figur 4 dargestellt. In Figur 5 umfasst die Flatterventilkomponente 11 das Flatterventil 12 und ein Befestigungselement 15 mit denen durch die Verschweißungsstelle 5 angedeutete Verbindungsstellen zum Zylinderauslasskanal 21. Das Flatterventil 12 umfasst dabei 2 Flatterelemente 16, welche ein Anbringungssegment 19 und ein Abdichtungssegment 18 umfassen, wobei das Abdichtungssegment 18 aus einem elastischen Material besteht. Das Anbringungssegment 19 kann auch aus einem elastischen Material bestehen, beispielsweise Federstahl, oder einem anderen Material, das geeignet ist das Abdichtungssegment 18 des Flatterelements 16 an das Flatterventil 12 oder das Befestigungselement 15 während des Betriebs der Kompressoreinheit 1 zu halten. Der Übergang von dem Material des Anbringungssegment 19 zum elastische Material des Abdichtungssegment 18 kann dabei fließend, d.h. graduell, oder abrupt, d.h. beispielsweise durch Zusammenkleben der beiden Segmente 18, 19, verwirklicht werden.

### Bezugszeichenliste:

- 1: Kompressoreinheit zur Luftverdichtung
- 2: Motor
- 3: Federelement; Feder
- 4: Hubkolbenverdichter
- 5: Verschweißungsstelle
- 6: selbstschneidende Schraube
- 7: Kolben
- 8: Pleuelstange
- 9: Zylinder
- 10: Hubraum des Zylinders
- 11: Flatterventilkomponente
- 12: Flatterventil
- 13: Auslassventil des Zylinders
- 14: Einlassventil des Zylinders
- 15: Befestigungselement der Flatterventilkomponente
- 16: Flatterelement der Flatterventilkomponente
- 17: elastisches Material zur Abdichtung eines Luftkanals und zur Rückstellung von Luftströmen
- 18: Abdichtsegment des Flatterelements
- 19: Anbringungssegment des Flatterelements
- 20: Strömungsrichtung
- 21: Zylinderauslasskanal
- 22: Zylindereinlasskanal
- 23: Abdichtwinkel β
- 24: Längserstreckung des Abdichtsegment des Flatterelements
- 25: Quererstreckung des Abdichtsegment des Flatterelements

## Patentansprüche

1. Kompressoreinheit zur Luftverdichtung innerhalb tragbarer/transportabler Systeme, wobei die Kompressoreinheit (1) mindestens einen Motor (2) und mindestens einen Hubkolbenverdichter (4) mit einem Zylinder (9) und mit einem Kolben (7) aufweist, wobei der Zylinder (9) eine Flatterventilkomponente (11) aufweist, wobei die Flatterventilkomponente (11) mindestens ein Flatterventil (12) als Auslassventil des Zylinders (9) aufweist, wobei die Flatterventilkomponente (11) ein Befestigungselement (15) und ein oder mehrere Flatterelemente (16) bestehend aus elastischem Material (17) zur Abdichtung eines Luftkanals und zur Rückstellung von Luftströmen aufweist, wobei das eine oder mindestens eins der mehreren Flatterelemente (16) ein Abdichtsegment (18) zur Abdichtung eines Auslasskanals (21) des Zylinders (9) umfasst und ein Anbringungssegment (19) zum Anbringen an das Befestigungselement (15) der Flatterventilkomponente (11) umfasst, **dadurch gekennzeichnet, dass** das Abdichtsegment (18) in Strömungsrichtung (20) nach dem Anbringungssegment (19) angeordnet ist.

2. Kompressoreinheit nach Anspruch 1, wobei das eine oder mindestens eins der mehreren Flatterelemente (16)
- eine Scheibe mit der gleichen Form wie der Querschnitt eines Auslasskanals (21) des Zylinders (9) ist.

3. Kompressoreinheit nach Anspruch 2, wobei das eine oder mindestens eins der mehreren Flatterelemente (16)
- die Form einer Lochscheibe mit einem mittigen Loch aufweist
wobei der radial äußere Abschnitt des einen oder des mindestens einen Flatterelements (16) das Abdichtsegment ist und der radial innere Abschnitt des einen oder des mindestens einen Flatterelements (16) das Anbringungssegment (19) ist.

4. Kompressoreinheit nach einem der vorangehenden Ansprüche, wobei das eine oder mindestens eins der mehreren Flatterelemente (16) in einem Zylinderauslasskanal (21) der Kompressoreinheit (1) angebracht ist, wobei das elastische Material (17) bevorzugt ausgesucht ist aus der Gruppe bestehend aus Polyethylen, Polypropylen, Polyurethan, Fluorkautschuke, Chlorkautschuke, Silikonkautschuke, Polyurethankautschuke und Federstahl.

5. Kompressoreinheit nach einem der vorangehenden Ansprüche, wobei das Anbringungssegment (19) des Flatterelements (16) formschlüssig oder stoffschlüssig, bevorzugt stoffschlüssig, mit dem Befestigungselement (15) der Flatterventilkomponente (11) verbunden ist.

6. Kompressoreinheit nach einem der vorangehenden Ansprüche, wobei mindestens eins der Abdichtsegmente (18) des einen oder der mehreren Flatterelemente (16) eine Quer- sowie eine Längserstreckung (25, 24) aufweist, wobei das Verhältnis von Längs- zu Quererstreckung (24, 25) im Bereich von 500:1 bis 1:1 liegt, wobei die Längserstreckung (24) des mindestens einen Abdichtsegments (18) bevorzugt einen Abdichtwinkel β (23) zur Strömungsrichtung (20) im Bereich von 10 bis 80° aufweist, ganz besonders bevorzugt im Bereich von 30 bis 60°.

7. Kompressoreinheit nach einem der vorangehenden Ansprüche, wobei
- der Hubraum (10) des Zylinders (9) im Bereich von 1 bis 1000 cm³ liegt, bevorzugt im Bereich von 2 bis 200 cm³, besonders bevorzugt im Bereich von 3 bis 50 cm³, und/oder
- der Hubkolbenverdichter (4) dazu eingerichtet ist, eine Hubfrequenz im Bereich von 1 bis 1000 s⁻¹ zu erreichen, bevorzugt im Bereich von 10 bis 500 s⁻¹, besonders bevorzugt im Bereich von 140 bis 450 s⁻¹.

8. Kompressoreinheit nach einem der vorangehenden Ansprüche, wobei die Kompressoreinheit (1) keine Federelemente (3), insbesondere keine metallhaltige Feder zur Verwendung in einem Ventil, aufweist.

9. Kompressoreinheit nach einem der vorangehenden Ansprüche, wobei die Kompressoreinheit (1) Mittel zur Luftdruckmessung umfasst, wobei die Mittel zur Luftdruckmessung so ausgelegt sind, dass sie den Luftdruck in Strömungsrichtung (20) hinter der Flatterventilkomponente (11) des Zylinders (9) messen können.

10. Kompressoreinheit nach einem der vorangehenden Ansprüche, wobei die Flatterventilkomponente (11) eine selbstschneidende Schraube (6) zur Anbringung des einen oder des mindestens einen Flatterelements (16) aufweist.

11. Kompressoreinheit nach einem der vorangehenden Ansprüche, wobei das Befestigungselement (15) der Flatterventilkomponente (11) an eine Innenwand des Zylinders (9) oder des Zylinderauslasskanals (21) angeschweißt ist.

12. Tragbares/transportables System zum Abdichten und Aufpumpen von Fahrzeugluftreifen, umfassend
- mindestens eine Kompressoreinheit (1) wie in einem der Ansprüche 1 bis 11 definiert und
- mindestens einen Dichtmittelbehälter zur Aufnahme eines Dichtmittels und/oder eines Gases
und optional
- mindestens eine Verteilereinheit zum Erzeugen und Verteilen einer Dispersion bestehend aus Dichtmittel und Gas in einen Fahrzeugluftreifen.

## Claims

1. Compressor unit for compressing air within portable/transportable systems, wherein the compressor unit (1) has at least one motor (2) and at least one reciprocating-piston compressor (4) with a cylinder (9) and with a piston (7), wherein the cylinder (9) has a flutter-valve component (11), wherein the flutter-valve component (11) has at least one flutter valve (12) as an outlet valve of the cylinder (9), wherein the flutter-valve component (11) has a fastening element (15) and one or more flutter elements (16), consisting of elastic material (17), for sealing of an air channel and for resetting for air streams, wherein the one or at least one of the multiple flutter elements (16) comprises a sealing segment (18), for sealing of an outlet channel (21) of the cylinder (9), and an attachment segment (19), for attachment to the fastening element (15) of the flutter-valve component (11), **characterized in that** the sealing segment (18) is arranged after the attachment segment (19) in the flow direction (20).

2. Compressor unit according to Claim 1, wherein the one or at least one of the multiple flutter elements (16)
- is a disc which has the same shape as the cross section of an outlet channel (21) of the cylinder (9).

3. Compressor unit according to Claim 2, wherein the one or at least one of the multiple flutter elements (16)
- has the shape of a perforated disc with a central hole, wherein the radially outer portion of the one or the at least one flutter element (16) is the sealing segment and the radially inner portion of the one or the at least one flutter element (16) is the attachment segment (19).

4. Compressor unit according to one of the preceding claims, wherein the one or at least one of the multiple flutter elements (16) is attached in a cylinder outlet channel (21) of the compressor unit (1), wherein the elastic material (17) is preferably selected from the group consisting of polyethylene, polypropylene, polyurethane, fluoro rubbers, chlorinated rubbers, silicone rubbers, polyurethane rubbers and spring steel.

5. Compressor unit according to one of the preceding claims, wherein the attachment segment (19) of the flutter element (16) is connected in a form-fitting or materially bonded, preferably materially bonded, manner to the fastening element (15) of the flutter-valve component (11).

6. Compressor unit according to one of the preceding claims, wherein at least one of the sealing segments (18) of the one or the multiple flutter elements (16) has a transverse extent and a longitudinal extent (25, 24), wherein the ratio of longitudinal extent to transverse extent (24, 25) lies in the range of 500:1 to 1:1, wherein the longitudinal extent (24) of the at least one sealing segment (18) preferably has a sealing angle ß (23) to the flow direction (20) in the range of 10 to 80°, very particularly preferably in the range of 30 to 60°.

7. Compressor unit according to one of the preceding claims, wherein
- the displacement volume (10) of the cylinder (9) lies in the range of 1 to 1000 cm³, preferably in the range of 2 to 200 cm³, particularly preferably in the range of 3 to 50 cm³, and/or
- the reciprocating-piston compressor (4) is configured to attain a stroke frequency in the range of 1 to 1000 s⁻¹, preferably in the range of 10 to 500 s⁻¹, particularly preferably in the range of 140 to 450 s⁻¹.

8. Compressor unit according to one of the preceding claims, wherein the compressor unit (1) has no spring elements (3), in particular no metal-containing spring for use in a valve.

9. Compressor unit according to one of the preceding claims, wherein the compressor unit (1) comprises means for measuring air pressure, wherein the means for measuring air pressure are designed in such a way that they are able to measure the air pressure behind the flutter-valve component (11) of the cylinder (9) in the flow direction (20).

10. Compressor unit according to one of the preceding claims, wherein the flutter-valve component (11) has a self-tapping screw (6) for attachment of the one or the at least one flutter element (16).

11. Compressor unit according to one of the preceding claims, wherein the fastening element (15) of the flutter-valve component (11) is welded to an inner wall of the cylinder (9) or of the cylinder outlet channel (21).

12. Portable/transportable system for sealing and inflating pneumatic vehicle tyres, comprising
- at least one compressor unit (1) as defined in one of Claims 1 to 11, and
- at least one sealant container for accommodating a sealant and/or a gas, and optionally
- at least one distributor unit for generating a dispersion consisting of sealant and gas and distributing it into a pneumatic vehicle tyre.

## Revendications

1. Unité de compresseur pour la compression de l'air dans des systèmes portables/transportables, l'unité de compresseur (1) présentant au moins un moteur (2) et au moins un compresseur (4) à piston élévateur pourvu d'un cylindre (9) et d'un piston (7), le cylindre (9) présentant un composant soupape à languette (11), le composant soupape à languette (11) présentant au moins une soupape à languette (12) en tant que soupape de sortie du cylindre (9), le composant soupape à languette (11) présentant un élément de fixation (15) et un ou plusieurs éléments languette (16) en matériau élastique (17) pour la fermeture étanche d'un canal à air et pour le rappel de flux d'air, ledit un ou au moins l'un desdits plusieurs éléments languette (16) comprenant un segment de fermeture (18) pour la fermeture étanche d'un canal de sortie (21) du cylindre (9) et un segment de montage (19) pour le montage à l'élément de fixation (15) du composant soupape à languette (11), **caractérisée en ce que** le segment de fermeture (18) est agencé, dans le sens d'écoulement (20), en aval du segment de montage (19).

2. Unité de compresseur selon la revendication 1, ledit un ou au moins l'un desdits plusieurs éléments languette (16)
- étant un disque présentant la même forme que celle de la section transversale d'un canal de sortie (21) du cylindre (9).

3. Unité de compresseur selon la revendication 2, ledit un ou au moins l'un desdits plusieurs éléments languette (16)
- présentant la forme d'un disque perforé pourvu d'un trou central, la section radialement externe dudit un ou dudit au moins un élément languette (16) étant le segment de fermeture et la section radialement interne dudit un ou dudit au moins un élément languette (16) étant le segment de montage (19).

4. Unité de compresseur selon l'une des revendications précédentes, ledit un ou au moins l'un desdits plusieurs éléments languette (16) étant monté dans un canal de sortie (21) de cylindre de l'unité de compresseur (1), le matériau élastique (17) étant de préférence choisi dans le groupe constitué par le polyéthylène, le polypropylène, le polyuréthane, les caoutchoucs fluorés, les caoutchoucs chlorés, les caoutchoucs de silicone, les caoutchoucs de polyuréthane et l'acier à ressort.

5. Unité de compresseur selon l'une des revendications précédentes, l'élément de montage (19) de l'élément languette (16) étant relié par complémentarité de forme ou par liaison de matière, de préférence par liaison de matière, à l'élément de fixation (15) du composant soupape à languette (11).

6. Unité de compresseur selon l'une des revendications précédentes, au moins l'un des segments de fermeture (18) dudit un ou desdits plusieurs éléments languette (16) présentant une étendue transversale ainsi que longitudinale (25, 24), le rapport de l'étendue longitudinale à l'étendue transversale (24, 25) se situant dans la plage de 500:1 à 1:1, l'étendue longitudinale (24) dudit au moins un segment de fermeture (18) présentant de préférence un angle de fermeture ß (23) par rapport au sens d'écoulement (20) dans la plage de 10 à 80°, de manière tout particulièrement préférée dans la plage de 30 à 60°.

7. Unité de compresseur selon l'une des revendications précédentes,
- la cylindrée (10) du cylindre (9) étant située dans la plage de 1 à 1000 cm³, de préférence dans la plage de 2 à 200 cm³, de manière particulièrement préférée dans la plage de 3 à 50 cm³ et/ou
- le compresseur (4) à piston élévateur étant conçu pour atteindre une fréquence de course dans la plage de 1 à 1000 s⁻¹, de préférence dans la plage de 10 à 500 s⁻¹, de manière particulièrement préférée dans la plage de 140 à 450 s⁻¹.

8. Unité de compresseur selon l'une des revendications précédentes, l'unité de compresseur (1) ne présentant pas d'éléments à ressort (3), en particulier pas de ressorts métalliques destinés à être utilisés dans une soupape.

9. Unité de compresseur selon l'une des revendications précédentes, l'unité de compresseur (1) comprenant des moyens pour la mesure de la pression de l'air, les moyens pour la mesure de la pression de l'air étant conçus de telle sorte qu'ils peuvent mesurer la pression de l'air, dans le sens d'écoulement (20), en aval du composant soupape à languette (11) du cylindre (9).

10. Unité de compresseur selon l'une des revendications précédentes, le composant soupape à languette (11) présentant une vis autotaraudeuse (6) pour le montage dudit un ou dudit au moins un élément languette (16).

11. Unité de compresseur selon l'une des revendications précédentes, l'élément de fixation (15) du composant soupape à languette (11) étant soudé sur une paroi interne du cylindre (9) ou du canal de sortie (21) de cylindre.

12. Système portable/transportable pour la fermeture étanche et le gonflage de pneus de véhicule, comprenant
- au moins une unité de compresseur (1) telle que définie dans l'une des revendications 1 à 11 et
- au moins un réservoir à agent d'étanchéité destiné à recevoir un agent d'étanchéité et/ou un gaz
et éventuellement
- au moins une unité de distribution destinée à générer et à distribuer une dispersion constituée par l'agent d'étanchéité et le gaz dans un pneu de véhicule.
